# EUROPEAN PATENT APPLICATION

(11) **EP 4 575 745 A1**
(43) Date of publication of application: **25.06.2025**
(21) Application number: 23869732.0
(22) Date of filing: 14.06.2023
(51) Int. Cl.: G06F 3/06

(54) **HARD DISK MANAGEMENT METHOD, HARD DISK CONTROL METHOD AND RELATED DEVICE**

(30) Priority: 29.09.2022 CN 202211204997
(71) Applicant: Huawei Technologies Co., Ltd., Shenzhen, Guangdong 518129 (CN)
(72) Inventor: ZHANG, Ying, Shenzhen, Guangdong 518129 (CN); ZHAO, Jinwei, Shenzhen, Guangdong 518129 (CN); WANG, Longzhao, Shenzhen, Guangdong 518129 (CN)
(74) Representative: Goddar, Heinz J.
(86) International application number: PCT/CN2023/100138
(87) International publication number: WO 2024/066483

(57) **Abstract**

A hard disk management method, a hard disk control method, and a related device are provided. The method includes: obtaining an available physical capacity of a hard disk (101); allocating a hard disk over-provisioning OP capacity to the hard disk based on a configuration requirement of a service configured by the hard disk (102); generating a setting instruction (103), where the setting instruction instructs the hard disk to divide the available physical capacity into a hard disk available capacity and the hard disk OP capacity; and sending the setting instruction to the hard disk (104). According to the method, there is no need to reserve excessively sufficient hard disk OP space, thereby improving space utilization of the hard disk, and resolving a problem of a waste of a hard disk capacity caused because the hard disk OP capacity cannot be properly used.

## Description

This application claims priority to Chinese Patent Application No. CN202211204997.3, filed with the China National Intellectual Property Administration on September 29, 2022 and entitled "HARD DISK MANAGEMENT METHOD, HARD DISK CONTROL METHOD, AND RELATED DEVICE", which is incorporated herein by reference in its entirety.

### TECHNICAL FIELD

This application relates to the field of solid state disks, and in particular, to a hard disk management method, a hard disk control method, and a related device.

### BACKGROUND

Hard disk space of a solid state disk (solid state disk or solid state drive, SSD) is divided into hard disk available capacity space and over-provisioning (over-provisioning, OP). The hard disk available capacity space is a space area that is reported by the SSD hard disk to a user and that is visible and accessible to the user. A capacity of the over-provisioning is an actual physical flash available capacity minus a hard disk available capacity. This area is generally used for SSD optimization, including wear leveling, GC, and bad block mapping. The over-provisioning sacrifices user data space, but brings many benefits: improving write performance: accelerating a write speed because garbage collection does not need to be frequently performed during data write due to presence of the over-provisioning, and reducing write amplification; increasing flash endurance: reducing a quantity of read/write times of an NAND flash by reducing data migration, and increasing endurance; and providing data protection: mainly providing data protection in addition to error checking and correcting (error-correcting code memory, ECC).

Currently, an OP size of the SSD hard disk is fixed, and is determined by hardware and a manufacturer policy. The OP is invisible or unavailable to a storage system, but can be used only by internal logic of the SSD hard disk, causing a capacity waste.

### SUMMARY

Embodiments of this application provide a hard disk management method, a hard disk control method, and a related device, to improve space utilization of a hard disk and reduce a capacity waste.

According to a first aspect, this application provides a hard disk management method, including:
obtaining an available physical capacity of a hard disk, where hard disk space includes available hard disk space and OP; an OP capacity is the available physical capacity minus a hard disk available capacity; and to properly use a hard disk capacity, the available physical capacity of the hard disk, that is, an actual capacity of the hard disk first needs to be obtained.
allocating a hard disk over-provisioning OP capacity to the hard disk based on a configuration requirement of a service configured by the hard disk, where after the hard disk is connected to a storage system of a computer or a main controller, the hard disk is configured to process a relate service on the computer or the main controller; different services have different configuration requirements; and an OP size of the hard disk may be estimated based on the configuration requirement of the service configured by the hard disk, to determine an appropriate hard disk OP capacity;
generating a setting instruction, where the setting instruction instructs the hard disk to divide the available physical capacity into a hard disk available capacity and the hard disk OP capacity, where after hard disk OP is determined, the hard disk is partitioned, and the hard disk available capacity is the available physical capacity minus the hard disk OP capacity; and
sending the setting instruction to the hard disk, where after the hard disk is partitioned, the setting instruction is generated, and the instruction is sent to the hard disk, so that the hard disk is partitioned based on the hard disk available capacity and the hard disk OP capacity in the instruction.

According to the hard disk management method provided in this embodiment of this application, after the hard disk is connected, the available physical capacity of the hard disk is obtained, and then the hard disk OP capacity is determined based on the service configured by the hard disk, so that the hard disk OP capacity can be flexibly adjusted based on the configuration requirement of the service. In the conventional technology, hard disk OP is directly set when a hard disk is delivered from a factory. Therefore, a preset hard disk OP capacity may have excessively large redundancy. Therefore, in comparison with the conventional technology, in the method provided in this application, there is no need to reserve excessively sufficient hard disk OP, thereby improving space utilization of the hard disk, and resolving a problem of a waste of a hard disk capacity caused because the hard disk OP capacity cannot be properly used.

In a possible implementation, the method further includes:
determining, in response to a hard disk event reported by the hard disk, whether the hard disk OP capacity needs to be adjusted; and
if the hard disk OP capacity needs to be adjusted, adjusting the hard disk OP capacity and the hard disk available capacity based on the hard disk event, and regenerating a setting instruction, where a sum of the hard disk OP capacity and the hard disk available capacity remains unchanged.

In a possible implementation, the method further includes:
periodically obtaining state information of the hard disk;
determining, based on the state information, whether the hard disk OP capacity needs to be adjusted; and
if the hard disk OP capacity needs to be adjusted, adjusting the hard disk OP capacity and the hard disk available capacity based on the state information, and regenerating a setting instruction, where a sum of the hard disk OP capacity and the hard disk available capacity remains unchanged.

In a possible implementation, the method further includes:
dividing the hard disk available capacity into a user available capacity and a system capacity based on system information of a storage system, where
the setting instruction specifically instructs the hard disk to divide the available physical capacity into the user available capacity, the system capacity, and the hard disk OP capacity; and
when the hard disk OP capacity needs to be adjusted, the adjusting the hard disk OP capacity and the hard disk available capacity, and regenerating a setting instruction specifically includes:
   adjusting the hard disk OP capacity and the system capacity based on the system information, and regenerating a setting instruction, where a sum of the hard disk OP capacity and the system capacity remains unchanged.
   In a possible implementation,
   the system capacity includes a system data capacity and a system OP capacity, where
   the setting instruction specifically instructs the hard disk to divide the available physical capacity into the user available capacity, the system data capacity, the system OP capacity, and the hard disk OP capacity; and
   when the hard disk OP capacity needs to be adjusted, the adjusting the hard disk OP capacity and the hard disk available capacity, and regenerating a setting instruction specifically includes:
      adjusting the hard disk OP capacity and the system OP capacity based on the system information, and regenerating a setting instruction, where a sum of the hard disk OP capacity and the system OP capacity remains unchanged.

In a possible implementation, before the obtaining an available physical capacity of a hard disk, the method further includes:
sending a query instruction to the hard disk, where the query instruction instructs the hard disk to send the available physical capacity.

In a possible implementation, the method further includes:
writing data into the hard disk; and
receiving write error information of the hard disk when a write capacity of the hard disk exceeds the hard disk available capacity.

According to a second aspect, this application provides a hard disk control method, including:
sending an available physical capacity of a hard disk to a hard disk management apparatus; and
dividing the available physical capacity of the hard disk in response to a setting instruction sent by the hard disk management apparatus, where the setting instruction is used for dividing the available physical capacity into a hard disk available capacity and a hard disk OP capacity.

In a possible implementation, the method further includes:
reporting a hard disk event of the hard disk to the hard disk management apparatus.

In a possible implementation, the method further includes:
sending state information of the hard disk to the hard disk management apparatus in response to a query instruction sent by the hard disk management apparatus.

In a possible implementation, the method further includes:
receiving data written by the hard disk management apparatus; and
returning write error information if a write capacity of the hard disk exceeds the hard disk available capacity after the data is written.

According to a third aspect, this application provides a hard disk management apparatus, including:
an obtaining module, configured to obtain an available physical capacity of a hard disk;
a configuration module, configured to allocate a hard disk over-provisioning OP capacity to the hard disk based on a configuration requirement of a service configured by the hard disk;
a setting module, configured to generate a setting instruction, where the setting instruction instructs the hard disk to divide the available physical capacity into a hard disk available capacity and the hard disk OP capacity; and
a sending module, further configured to send the setting instruction to the hard disk.

In a possible implementation, the apparatus further includes:
a processing module, configured to determine, in response to a hard disk event reported by the hard disk, whether the hard disk OP capacity needs to be adjusted, where
the setting module is further configured to adjust the hard disk OP capacity and the hard disk available capacity based on the hard disk event, and regenerate a setting instruction, where a sum of the hard disk OP capacity and the hard disk available capacity remains unchanged.

In a possible implementation,
the obtaining module is further configured to periodically obtain state information of the hard disk; and the apparatus further includes:
a processing module, configured to determine, based on the state information, whether the hard disk OP capacity needs to be adjusted, where
the setting module is further configured to adjust the hard disk OP capacity and the hard disk available capacity based on the state information, and regenerate a setting instruction, where a sum of the hard disk OP capacity and the hard disk available capacity remains unchanged.

In a possible implementation, before the available physical capacity of the hard disk is obtained, the apparatus further includes:
a query module, configured to send a query instruction to the hard disk, where the query instruction instructs the hard disk to send the available physical capacity.

In a possible implementation, the apparatus further includes:
a writing module, configured to write data into the hard disk, where
the obtaining module is further configured to receive write error information of the hard disk when a write capacity of the hard disk exceeds the hard disk available capacity.

According to a fourth aspect, this application provides a hard disk controller, including:
a sending module, configured to send an available physical capacity of a hard disk to a hard disk management apparatus; and
a partitioning module, configured to divide the available physical capacity of the hard disk in response to a setting instruction sent by the hard disk management apparatus, where the setting instruction is used for dividing the available physical capacity into a hard disk available capacity and a hard disk OP capacity.

In a possible implementation, the hard disk controller further includes:
a reporting module, configured to report a hard disk event of the hard disk to the hard disk management apparatus.

In a possible implementation, the hard disk controller further includes:
a feedback module, configured to send state information of the hard disk to the hard disk management apparatus in response to a query instruction sent by the hard disk management apparatus.

In a possible implementation, the hard disk controller further includes:
a receiving module, configured to receive data written by the hard disk management apparatus, where
the sending module is further configured to return write error information if a write capacity of the hard disk exceeds the hard disk available capacity after the data is written.

According to a fifth aspect, this application provides a storage system. The device includes a memory and a processor. The memory stores code, the processor is configured to execute the code, and when the code is executed, the processor performs the method according to any one of the foregoing aspects.

According to a sixth aspect, this application provides a computer storage medium. The computer storage medium stores one or more instructions, and when the instructions are executed by one or more computers, the one or more computers are enabled to implement the method according to any one of the foregoing aspects.

According to a seventh aspect, this application provides a computer program product. The computer program product stores instructions, and when the instructions are executed by a computer, the computer is enabled to implement the method according to any one of the foregoing aspects.

It can be learned from the foregoing technical solutions that this application has the following advantages.

Embodiments of this application disclose a hard disk management method, including: obtaining an available physical capacity of a hard disk; allocating a hard disk over-provisioning OP capacity to the hard disk based on a configuration requirement of a service configured by the hard disk; generating a setting instruction, where the setting instruction instructs the hard disk to divide the available physical capacity into a hard disk available capacity and the hard disk OP capacity; and sending the setting instruction to the hard disk. According to the hard disk management method provided in embodiments of this application, after the hard disk is connected, the available physical capacity of the hard disk is obtained, and hard disk OP is determined based on the service configured by the hard disk, so that the hard disk OP better meets a configuration requirement of a current service. In the conventional technology, hard disk OP is directly set when a hard disk is delivered from a factory. Therefore, a preset hard disk OP capacity may have excessively large redundancy. Therefore, in comparison with the conventional technology, in the method provided in this application, there is no need to reserve excessively sufficient hard disk OP space, thereby improving space utilization of the hard disk, and resolving a problem of a waste of a hard disk capacity caused because the hard disk OP capacity cannot be properly used.

### BRIEF DESCRIPTION OF DRAWINGS

FIG. 1 is a diagram of interaction between a storage system and a hard disk according to an embodiment of this application;
FIG. 2 is a diagram of hard disk data write according to an embodiment of this application;
FIG. 3 is a diagram of a capacity adjustment method according to an embodiment of this application;
FIG. 4 is a diagram of another capacity adjustment method according to an embodiment of this application;
FIG. 5 is a diagram of a structure of a hard disk management apparatus according to an embodiment of this application;
FIG. 6 is a diagram of a structure of a hard disk controller according to an embodiment of this application; and
FIG. 7 is a diagram of a possible structure of a storage system according to an embodiment of this application.

### DESCRIPTION OF EMBODIMENTS

To make objectives, technical solutions, and advantages of this application clearer, the following describes embodiments of this application with reference to accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in an order other than content illustrated or described herein. Moreover, the terms "include", "have" and any other variants are intended to cover non-exclusive inclusion, for example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

A solid state disk (solid state disk or solid state drive, SSD), also referred to as a solid state drive, is a hard disk made of a solid state electronic storage chip array. After the solid state disk is assembled, an SSD manufacturer may additionally reserve a part of a total storage capacity of the hard disk as over-provisioning (over-provisioning, OP) during firmware programming. The over-provisioning sacrifices user data space, but brings many benefits: improving write performance: accelerating a write speed because garbage collection does not need to be frequently performed during data write due to presence of the over-provisioning, and reducing write amplification; increasing flash endurance: reducing a quantity of read/write times of an NAND flash by reducing data migration, and increasing endurance; and providing data protection: mainly providing data protection in addition to error checking and correcting (error-correcting code memory, ECC), data protection is mainly provided.

OP capacity sizes set by different SSD manufacturers vary, and specifically depend on an SSD application type and a total NAND flash storage capacity. Hard disks with large storage capacities and of different application types are generally configured with OP whose sizes are in proportion with the storage capacities.. This is because a requirement of using garbage collection, a spare block, and an enhanced data protection function to manage more NAND flash resources is higher.

In actual application, to ensure that a function and endurance of the hard disk are better, the SSD manufacturer usually choose to reserve OP as sufficient as possible. As a result, a part of a capacity of the OP is always idle. Because the part of idle capacity is invisible or unavailable to a storage system, a capacity waste is caused.

To resolve the foregoing problem, according to a first aspect, this application provides a hard disk management method. The method may be performed by a storage system, and is specifically performed by a hard disk management apparatus in the storage system. The hard disk management apparatus is software or hardware that is in the storage system and that performs state read, partitioning, and configuration on a connected hard disk.

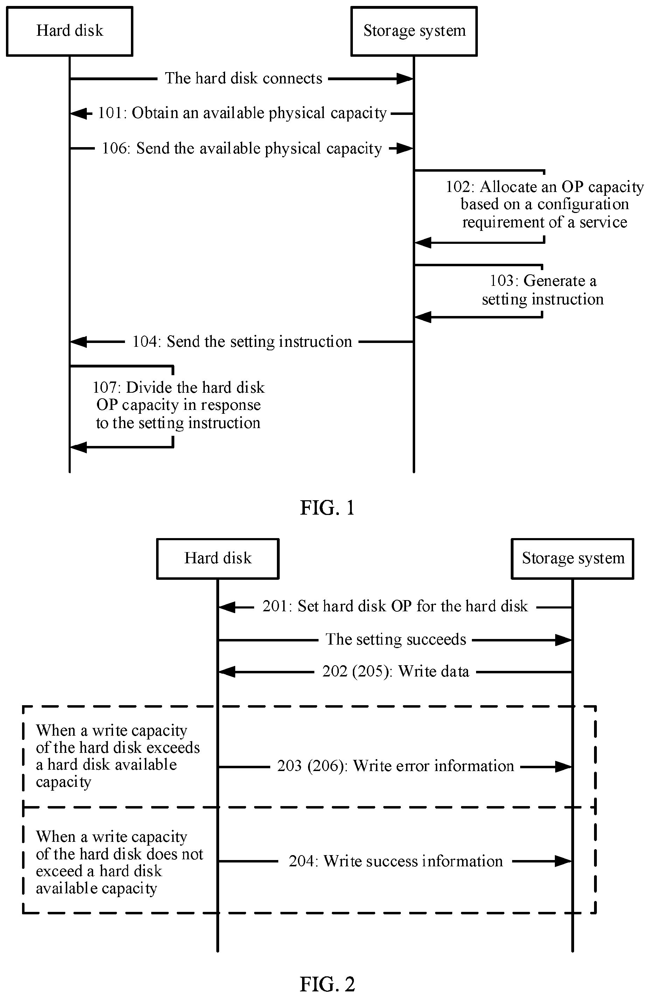

FIG. 1 is a diagram of interaction between a storage system and a hard disk according to an embodiment of this application. The method includes the following steps.

101: Obtain an available physical capacity of the hard disk.

It may be understood that the available physical capacity of the hard disk is a total capacity of the entire hard disk, and includes a hard disk available capacity and an OP capacity. The OP capacity is a capacity in OP. The hard disk available capacity is a capacity that can be used by the storage system or a user. A sum of the OP capacity and the hard disk available capacity is the available physical capacity. To properly use a hard disk capacity, the available physical capacity of the hard disk, that is, an actual capacity of the hard disk first needs to be obtained after the hard disk is connected.

Manners of obtaining the available physical capacity include but are not limited to the following: for a hard disk whose OP is not set at delivery, directly obtaining a total capacity of the hard disk, that is, an available physical capacity; for a hard disk whose OP is set at delivery but the OP is visible, obtaining an OP capacity based on hard disk information, and then adding the OP capacity and a hard disk available capacity sent by the hard disk, to obtain an available physical capacity; and for a hard disk whose OP is set at delivery but the OP is invisible, sending a setting instruction to the hard disk, where the setting instruction instructs a hard disk controller of the hard disk to open a hard disk OP capacity, to enable the OP capacity to be in an editable state, and sending information about the OP capacity and a hard disk available capacity to a storage system.

In a possible implementation, before step 101, the method further includes:
sending a query instruction to the hard disk, where the query instruction instructs the hard disk to send the available physical capacity.

It may be understood that, if the available physical capacity of the hard disk is not actively reported when the hard disk is connected, the hard disk management apparatus of the storage system sends a query command to the hard disk, to indicate the hard disk to send the available physical capacity.

102: Allocate the OP capacity to the hard disk based on a configuration requirement of a service configured by the hard disk.

It may be understood that, after the hard disk is connected to a storage system of a computer or a main controller, the hard disk is configured to process a relate service on the computer or the main controller. Based on processing requirements of different services, requirements of the hard disk on write performance, write amplification, a quantity of NAND read/write times, and the like are different. For a service with a high configuration requirement, a hard disk performance requirement is high, and a large OP capacity is required. For a service with a low configuration requirement, a hard disk performance requirement may be appropriately reduced. Therefore, in comparison with the service with the high performance requirement, the service with the low configuration requirement requires a smaller OP capacity. A hard disk OP size may be estimated based on the configuration requirement of the service configured by the hard disk, to determine proper hard disk OP. During running of a high-performance service, an OP capacity required for the hard disk is large, and during running of a low-performance service, an OP capacity required for the hard disk is small.

103: Generate a setting instruction, where the setting instruction instructs the hard disk to divide the available physical capacity into the hard disk available capacity and the hard disk OP.

It may be understood that, after the available physical capacity is obtained and the hard disk OP capacity is determined, the hard disk available capacity is obtained by subtracting the hard disk OP capacity from the available physical capacity. The hard disk is partitioned into hard disk available capacity space and the OP. The hard disk available capacity is the available physical capacity minus the OP capacity.

104: Send the setting instruction to the hard disk.

It may be understood that, after the hard disk is partitioned, the setting instruction is generated, and the instruction is sent to the hard disk, so that the hard disk sets the OP capacity. Because the hard disk available capacity is the available physical capacity minus the OP capacity, the setting instruction sent to the hard disk may include only the OP capacity, indicating that this part of capacity is only used for hard disk optimization and is not allowed to be used by the storage system.

According to the hard disk management method provided in this embodiment of this application, after the hard disk is connected, the available physical capacity of the hard disk is obtained, and the hard disk OP is determined based on the service configured by the hard disk, so that the hard disk OP better meets a configuration requirement of a current service. In the conventional technology, hard disk OP is directly set when a hard disk is delivered from a factory. Therefore, a preset hard disk OP capacity may have excessively large redundancy. Therefore, in comparison with the conventional technology, in the method provided in this application, there is no need to reserve excessively sufficient hard disk OP space, thereby improving space utilization of the hard disk, and resolving a problem of a waste of a hard disk capacity caused because the hard disk OP capacity cannot be properly used.

In a possible implementation, after partitioning the capacity, the hard disk management apparatus of the storage system delivers the setting instruction to the hard disk for the hard disk to set the OP capacity of the hard disk, so that the hard disk clearly knows a size of the OP capacity configured by the system for the hard disk. In addition, the hard disk management apparatus also ensures that the storage system cannot allocate or use the hard disk OP. Specifically, FIG. 2 is a diagram of hard disk data write according to an embodiment of this application. The method includes the following steps.

201: Set the hard disk OP for the hard disk.

It may be understood that the step is equivalent to the foregoing step 104. The hard disk management apparatus of the storage system sends the setting instruction to the hard disk, where the setting instruction instructs the hard disk to set the hard disk OP.

202: Write data into the hard disk.

It may be understood that, after the hard disk OP is set for the hard disk, the hard disk may be used normally, and the storage system can write the data into the hard disk.

203: Receive write error information of the hard disk when a write capacity of the hard disk exceeds the hard disk available capacity.

It may be understood that, if the write capacity of the hard disk exceeds a capacity other than the OP capacity in the hard disk (in other words, exceeds the hard disk available capacity) after the data is written into the hard disk, it may indicate that a hard disk capacity is full. Even if the hard disk OP has an idle capacity, because the hard disk OP is only used for hard disk optimization, the hard disk sends the write error information to the hard disk management apparatus, and the data cannot be successfully written.

204: Receive write success information of the hard disk when a write capacity of the hard disk does not exceed the hard disk available capacity.

It may be understood that, if the write capacity of the hard disk does not exceed the capacity other than the OP capacity in the hard disk (in other words, does not exceed the hard disk available capacity), it may indicate that a hard disk capacity is not full, and the data can be successfully written.

In a possible implementation, a service processed by the hard disk changes. For example, after a service A with a high configuration requirement has been processed, a configuration requirement of a service B to be subsequently processed is low. In this case, the hard disk OP may be flexibly adjusted to reduce the OP capacity and increase the hard disk available capacity, so that the user can use more space. For example, the hard disk management apparatus adjusts a capacity allocation policy by responding to a hard disk event or periodically determining a hard disk state. Details are as follows.

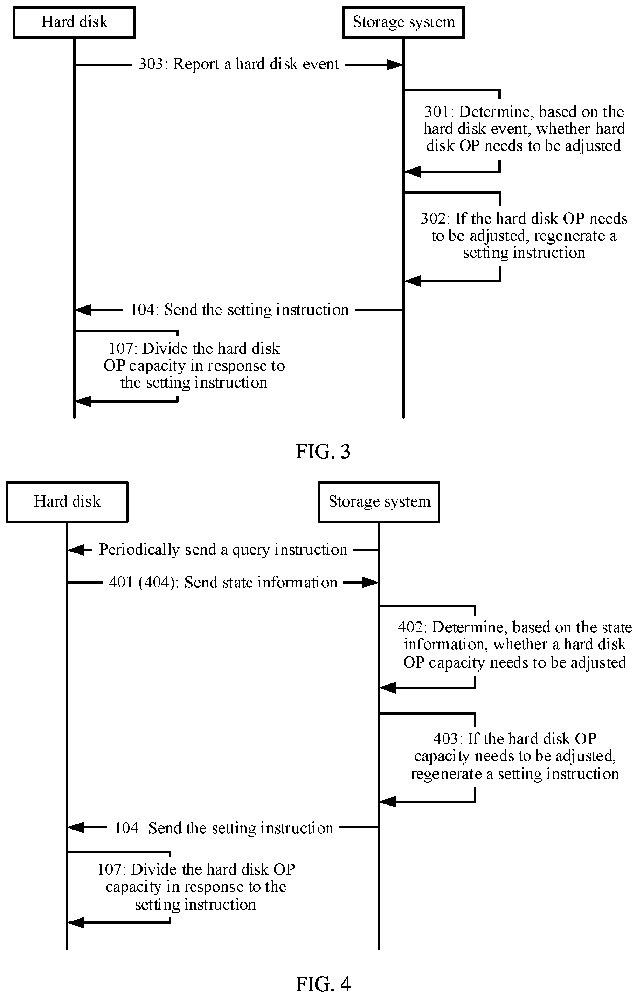

FIG. 3 is a diagram of a capacity adjustment method according to an embodiment of this application. The method includes the following steps.

301: Determine, in response to the hard disk event reported by the hard disk, whether hard disk OP needs to be adjusted.

It may be understood that, the hard disk event includes but is not limited to all events related to the hard disk, such as a hard disk service change, an insufficient hard disk available capacity, a bad hard disk sector, and damage of a hard disk partition table. After obtaining the hard disk event reported by the hard disk, the hard disk management apparatus determines whether the capacity needs to be reallocated. If the capacity does not need to be reallocated, no processing is performed. For example, a hard disk service changes, but after the change, not only a service configuration requirement is low, but also a required capacity is low. Even if a size of the OP does not change, the hard disk available capacity is sufficient for the service. In this case, the hard disk may not be adjusted.

302: If the hard disk OP needs to be adjusted, adjust the hard disk OP capacity and the hard disk available capacity based on the hard disk event, and regenerate a setting instruction, where a sum of the hard disk OP and the hard disk available capacity remains unchanged.

It may be understood that, after the hard disk event reported by the hard disk is obtained, the hard disk management apparatus determines that the capacity needs to be reallocated, and the hard disk management apparatus dynamically adjusts a capacity partition. For example, if the hard disk available capacity is insufficient, and in this case, hard disk amplification is low and the OP capacity is sufficient, a quota of the hard disk OP capacity is reduced and added to the hard disk available capacity, to partially shift the hard disk OP to the hard disk available capacity space.

After the setting instruction is generated, the setting instruction is sent to the hard disk. This is equivalent to the foregoing step 104.

FIG. 4 is a diagram of another capacity adjustment method according to an embodiment of this application. The method includes the following steps.

401: Periodically obtain state information of the hard disk.

It may be understood that the state information includes state information such as capacity usage, performance, endurance, and write amplification of each hard disk connected to the storage system. The hard disk management apparatus may further actively and periodically obtain the state information of the hard disk, including periodically sending a query instruction to the hard disk. The query instruction instructs the hard disk to send the state information. The hard disk management apparatus determines, based on the obtained state information, whether the hard disk OP capacity needs to be adjusted.

402: Determine, based on the state information, whether the hard disk OP capacity needs to be adjusted.

It may be understood that, after obtaining the state information of the hard disk, the hard disk management apparatus may determine, with reference to the configuration requirement of the service, whether the hard disk OP capacity needs to be adjusted, to be specific, whether the capacity partition of the hard disk needs to be adjusted.

403: If the hard disk OP capacity needs to be adjusted, adjust the hard disk OP capacity and the hard disk available capacity based on the state information, and regenerate a setting instruction, where a sum of the hard disk OP capacity and the hard disk available capacity remains unchanged.

It may be understood that, if write amplification of the hard disk is low and hard disk OP space is sufficient, a quota of the hard disk OP capacity may be reduced and a quota of the hard disk available capacity may be increased, to enable the capacity to shift from the hard disk OP to the hard disk available capacity space. If write amplification of the hard disk is high, the hard disk available capacity needs to be reduced and the hard disk OP capacity needs to be increased, to enable the capacity to shift from the hard disk available capacity space to the hard disk OP.

After the setting instruction is generated, the setting instruction is sent to the hard disk. This is equivalent to the foregoing step 104.

In a possible implementation, after the available physical capacity is divided into the hard disk available capacity and the hard disk OP capacity, the method further includes: dividing the hard disk available capacity into a user available capacity and a system capacity based on system information of the storage system.

It may be understood that the hard disk available capacity may be further divided into the user available capacity and the system capacity. The user available capacity is a visible and available capacity that is presented externally by the storage system. The system capacity is a capacity that is used by the storage system to store data generated by the storage system and ensure running of the storage system. For example, the capacity is used for storing metadata of user data and configuration information, and ensuring system running. It may be understood that, after the hard disk OP is planned based on the configuration requirement of the service, a part of original space used for the hard disk OP shifts into the hard disk available capacity. If a capacity required for executing the service does not reach the hard disk available capacity, a part of the hard disk available capacity may be used by the storage system to store related data, to improve running and working capabilities of the storage system.

In this case, the setting instruction specifically instructs the hard disk to divide the available physical capacity into the user available capacity, the system capacity, and the hard disk OP capacity.

When the hard disk OP capacity needs to be adjusted, in the foregoing step 302 and step 403, adjusting the hard disk OP capacity and the hard disk available capacity, and regenerating a setting instruction specifically includes:
adjusting the hard disk OP capacity and the system capacity based on the system information, and regenerating a setting instruction, where a sum of the hard disk OP capacity and the system capacity remains unchanged.

It may be understood that, in this embodiment of this application, a configuration requirement for processing a related service by the user on the hard disk needs to be preferentially ensured. Therefore, when the hard disk OP capacity needs to be adjusted, the user available capacity in the hard disk available capacity does not change, but the system capacity changes, to preferentially ensure that the service can be successfully processed and the hard disk runs normally. It should be noted that, when the hard disk OP capacity and the system capacity are adjusted, not only the state information of the hard disk needs to be considered, but also the system information of the storage system needs to be considered, so that after the hard disk OP capacity and the system capacity are adjusted, the hard disk and the system are still in a normal working state.

In a possible implementation, the system capacity includes a system data capacity and a system OP capacity.

It may be understood that system OP is over-provisioning of the storage system. Similar to the hard disk OP, the system OP is used for self-optimization of the storage system to ensure normal running of the storage system. After the system capacity is divided, the system capacity may be further divided into the system data capacity and the OP capacity. The system data capacity is used by the storage system to store the data generated by the storage system, for example, the metadata of the user data and the configuration information.

In this case, the setting instruction specifically instructs the hard disk to divide the available physical capacity into the user available capacity, the system data capacity, the system OP capacity, and the hard disk OP capacity.

When the hard disk OP capacity needs to be adjusted, adjusting the hard disk OP capacity and the hard disk available capacity, and regenerating a setting instruction specifically includes:
adjusting the hard disk OP capacity and the system OP capacity based on the system information, and regenerating a setting instruction, where a sum of the hard disk OP capacity and the system OP capacity remains unchanged.

It may be understood that, in this embodiment of this application, the system OP and the hard disk OP share traffic, and a ratio of OP used by the hard disk to OP used by the system is dynamically allocated and adjusted, to meet capacity requirements of the hard disk and the system. It should be noted that, when the hard disk OP capacity and the system OP capacity are adjusted, not only the state information of the hard disk needs to be considered, but also the system information of the storage system needs to be considered, so that after the hard disk OP capacity and the system OP capacity are adjusted, the hard disk and the system are still in a normal working state.

It may be understood that the foregoing capacity area division (partitioning) is a logical concept of the hard disk management apparatus. In a possible scenario, the storage system needs to be connected to a plurality of hard disks to jointly process a plurality of services. When the user configures services, the storage system may determine, based on a configuration requirement, a total capacity size required for processing the services, and then divide a total capacity into a plurality of capacity partitions for processing different services. Therefore, for a separate hard disk, a hard disk available capacity partition may be further divided into sub-function areas. Different sub-function areas are used for processing different services. In this embodiment of this application, only main function areas such as the user available capacity, the system data capacity, the system OP capacity, and the hard disk OP capacity are described, and a partitioning manner is not limited.

According to the method provided in this embodiment of this application, in actual application, a hard disk controller manages an entire available physical capacity including the user available capacity and the hard disk OP by using an FTL table, and reports the available physical capacity to the storage system by using a standard protocol. The hard disk management apparatus of the storage system finds a size of an expanded capacity, that is, a size of the entire available physical capacity, and may perform an operation by using the standard protocol. When a quantity of NAND flashes in the hard disk remains unchanged, an OP size is properly configured to increase the user available capacity. For example, for a hard disk whose available physical capacity is 200 G, generally, hard disk OP of 25 G is reserved, and a user available capacity is 175 G. It is found, by analyzing hard disk performance and the configuration requirement of and the service, that hard disk OP of 18 G is sufficient for software and hardware running. In this case, the user available capacity increases to 182 G. Similarly, during production of a hard disk, because an OP size is properly configured, a user available capacity with a same size may include a smaller quantity of NAND flashes, so that hard disk costs are reduced. For example, generally, OP of 30 G is configured for a hard disk whose user available capacity is 200 G. In other words, an available physical capacity of the hard disk that needs to be produced is 230 G. It is found, by analyzing hard disk performance and the configuration requirement of the service, that a hard disk of 25 G is sufficient for software and hardware running. When the user available capacity remains unchanged, the available physical capacity of the produced hard disk only needs 225 G, so that the hard disk costs are reduced.

According to a second aspect, this application provides a hard disk control method. The method may be performed by a hard disk, and is specifically performed by a hard disk controller in the hard disk. The hard disk controller is software or hardware that sets internal logic of the hard disk and that processes and feeds back an instruction delivered by a hard disk management apparatus.

FIG. 1 is a diagram of interaction between a storage system and the hard disk according to an embodiment of this application. The method includes the following steps.

106: Send an available physical capacity of the hard disk to the hard disk management apparatus.

It may be understood that the hard disk management apparatus is software or hardware that is in the storage system and that performs state read, partitioning, and configuration on the connected hard disk. The available physical capacity of the hard disk is a total capacity of the entire hard disk, and includes a hard disk available capacity and an OP capacity. The OP capacity is a capacity in OP. The hard disk available capacity is a capacity that can be used by the storage system or a user. A sum of the OP capacity and the hard disk available capacity is the available physical capacity. To properly use a hard disk capacity, the available physical capacity of the hard disk first needs to be sent to the hard disk management apparatus, after the hard disk is connected

After being connected to the storage system, the hard disk may actively send the available physical capacity to the storage system, or may send the available physical capacity to the storage system after receiving a query instruction sent by the hard disk management apparatus. The query instruction instructs the hard disk to send the available physical capacity.

107: Divide the available physical capacity of the hard disk in response to a setting instruction sent by the hard disk management apparatus, where the setting instruction is used for dividing the available physical capacity into the hard disk available capacity and the hard disk OP capacity.

It may be understood that partitioning of the hard disk is performed by the hard disk management apparatus. Therefore, after obtaining the setting instruction sent by the hard disk management apparatus, the hard disk controller divides the hard disk capacity based on a partitioning indication in the instruction, and specifically sets the OP capacity. The hard disk available capacity is the available physical capacity minus the OP capacity. The setting instruction may include only the OP capacity, indicating that this part of capacity is only used for hard disk optimization and is not allowed to be used by the storage system.

According to the hard disk control method provided in this embodiment of this application, the available physical capacity of the hard disk is sent to the hard disk management apparatus, and the available physical capacity of the hard disk is divided in response to the setting instruction sent by the hard disk management apparatus. Because the hard disk management apparatus determines the hard disk OP based on a service configured by the hard disk, the hard disk OP better meets a configuration requirement of a current service. There is no need to reserve excessively sufficient hard disk OP space, space utilization of the hard disk is improved, and a problem of a waste of a hard disk capacity caused because the hard disk OP capacity cannot be properly used is resolved.

In a possible implementation, after partitioning the capacity, the hard disk management apparatus of the storage system delivers the setting instruction to the hard disk for the hard disk to set the OP capacity of the hard disk, so that the hard disk clearly knows a size of the OP capacity configured by the system for the hard disk. In addition, the hard disk management apparatus also ensures that the storage system cannot allocate or use the hard disk OP. Specifically, FIG. 2 is a diagram of hard disk data write according to an embodiment of this application. The method includes the following steps.

205: Receive data written by the hard disk management apparatus.

It may be understood that step 205 is equivalent to step 202 in the embodiment of the first aspect. After the hard disk OP is set for the hard disk, the hard disk may be used normally, and the storage system can write the data into the hard disk.

206: Return write error information if a write capacity of the hard disk exceeds the hard disk available capacity after the data is written.

It may be understood that step 206 is equivalent to step 203 in the embodiment of the first aspect. After the data is written into the hard disk, if the write capacity of the hard disk exceeds a capacity other than the OP capacity in the hard disk (in other words, exceeds the hard disk available capacity), it may indicate that the hard disk capacity is full. Even if the hard disk OP has an idle capacity, because the hard disk OP is only used for hard disk optimization, the write error information is sent to the hard disk management apparatus, and the data cannot be successfully written.

In a possible implementation, a service processed by the hard disk changes. For example, after a service A with a high configuration requirement has been processed, a configuration requirement of a service B to be subsequently processed is low. In this case, the hard disk OP may be flexibly adjusted to reduce the OP capacity and increase the hard disk available capacity, so that the user can use more space. For example, the hard disk controller reports hard disk time of the hard disk or feeds back state information of the hard disk, so that the hard disk management apparatus adjusts a capacity allocation policy for the hard disk. Details are as follows.

Specifically, FIG. 3 is a diagram of a capacity adjustment method according to an embodiment of this application. The method includes the following steps.

303: Report a hard disk event of the hard disk to the hard disk management apparatus.

It may be understood that, the hard disk event includes but is not limited to all events related to the hard disk, such as a hard disk service change, an insufficient hard disk available capacity, a bad hard disk sector, and damage of a hard disk partition table. After the hard disk event is reported to the hard disk management apparatus, the hard disk management apparatus determines whether the capacity needs to be reallocated. If the capacity does not need to be reallocated, no processing is performed. If the capacity needs to be reallocated, the hard disk management apparatus dynamically adjusts a capacity partition. To be specific, the hard disk management apparatus sends the setting instruction to the hard disk, and then the hard disk controller partitions the available physical capacity in response to the setting instruction, that is, returns to step 107.

FIG. 4 is a diagram of another capacity adjustment method according to an embodiment of this application. The method includes the following steps.

404: Send the state information of the hard disk to the hard disk management apparatus in response to a query instruction sent by the hard disk management apparatus.

It may be understood that step 404 is equivalent to step 401 in the embodiment of the first aspect. The state information includes state information such as capacity usage, performance, endurance, and write amplification of each hard disk connected to the storage system. The hard disk management apparatus may further actively and periodically obtain the state information of the hard disk, including sending a query instruction to the hard disk. The query instruction instructs the hard disk to send the state information. After receiving the query instruction sent by the hard disk management apparatus, the hard disk controller feeds back the state information of the hard disk. After obtaining the state information of the hard disk, the hard disk management apparatus may determine, with reference to a configuration requirement of a service, whether the hard disk OP capacity needs to be adjusted, to be specific, whether the capacity partition of the hard disk needs to be adjusted. If the capacity partition needs to be adjusted, the setting instruction is redelivered, and then the hard disk controller partitions the available physical capacity in response to the setting instruction, that is, returns to step 107.

According to the method provided in this embodiment of this application, in actual application, the hard disk controller manages an entire available physical capacity including a user available capacity and the hard disk OP by using an FTL table, and reports the available physical capacity to the storage system by using a standard protocol. The hard disk management apparatus of the storage system finds a size of an expanded capacity, that is, a size of the entire available physical capacity, and may perform an operation by using the standard protocol.

According to a third aspect, this application provides a hard disk management apparatus. The apparatus may be deployed in various systems that run software, for example, a DOS operating system, a WINDOWS operating system, a UNIX operating system, and operating systems such as Linux and Netware. The apparatus may alternatively be deployed on a software system installed on a system and a device that combines software and hardware to manage capacities of all SSDs connected to a storage controller, divide the managed capacity into a plurality of capacity areas for different users to use, manage a quota and allocation of capacity space, dynamically adjust the quota to avoid over-capacity usage, implement dynamic capacity shifting, query information such as a capacity and write amplification of a hard disk by using a protocol command, adjust the capacity partitions based on system capacity usage, and deliver a command to the hard disk to set a hard disk OP capacity and run a policy. The hard disk management apparatus provided in this embodiment of this application may be a hardware device of a system, may be a hard disk management device in a system environment, or may be a processing module or unit specially configured to manage a hard disk connected to the system.

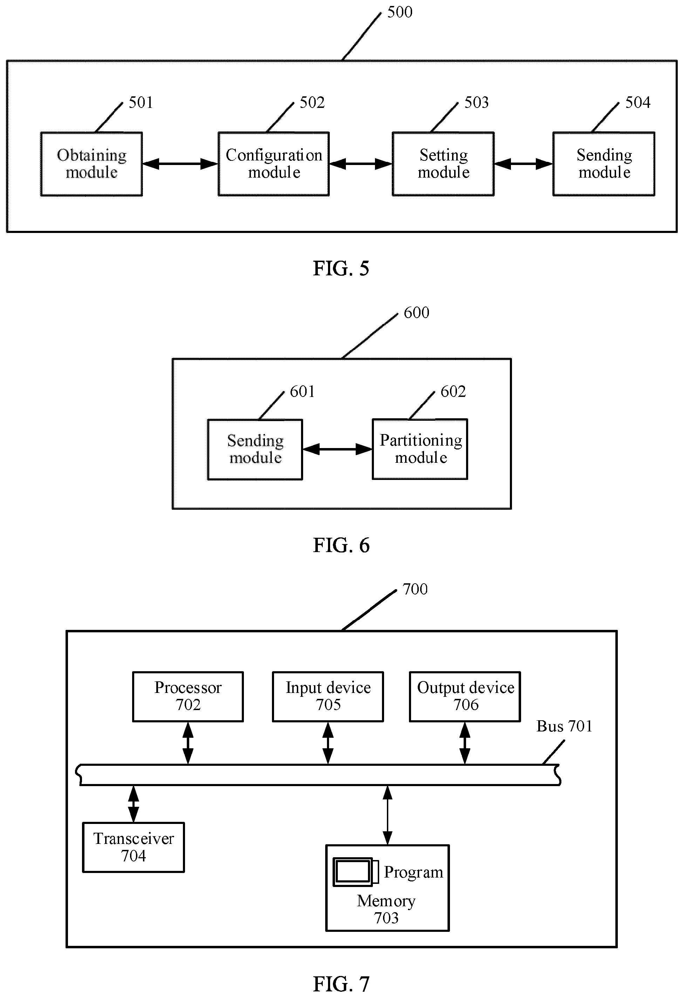

Specifically, refer to FIG. 5. A hard disk management apparatus 500 in this embodiment of this application includes an obtaining module 501, a configuration module 502, a setting module 503, and a sending module 504 that are connected via a bus. The hard disk management apparatus 500 may be the hard disk management apparatus in the foregoing method embodiments, or may be configured as one or more chips in a storage system. The processing apparatus 500 may be configured to perform some or all functions of hard disk management in the foregoing method embodiments.

For example, the obtaining module 501 may be configured to perform step 101, step 203, step 204, or step 401 in the foregoing method embodiments, and receive and obtain corresponding data. For example, the first obtaining module 501 is configured to: obtain an available physical capacity of a hard disk; periodically obtain state information of the hard disk; receive write error information of the hard disk when a write capacity of the hard disk exceeds a hard disk available capacity; and receive write success information of the hard disk when the write capacity of the hard disk does not exceed the hard disk available capacity. The configuration module 502 is configured to perform step 102 in the foregoing method embodiment. For example, the configuration module 502 may be configured to allocate a hard disk over-provisioning OP capacity to the hard disk based on a configuration requirement of a service configured by the hard disk. The setting module 503 is configured to perform step 103, step 302, and step 403 in the foregoing method embodiments. For example, the setting module 503 may be configured to: generate a setting instruction, where the setting instruction instructs the hard disk to divide the available physical capacity into a hard disk available capacity and the hard disk OP capacity; adjust the hard disk OP capacity and the hard disk available capacity based on a hard disk event, and regenerate a setting instruction; and adjust the hard disk OP capacity and the hard disk available capacity based on the state information and regenerate a setting instruction. The sending module 504 is configured to perform step 104 in the foregoing method embodiment. For example, the sending module 504 may be configured to send the setting instruction to the hard disk.

In a possible implementation, the apparatus further includes a processing module, configured to perform step 301 and step 402 in the foregoing method embodiments. For example, the processing module may be configured to determine, in response to the hard disk event reported by the hard disk, whether the hard disk OP capacity needs to be adjusted, and further configured to determine, based on the state information, whether the hard disk OP capacity needs to be adjusted.

In a possible implementation, the apparatus further includes a query module, configured to perform step 100 in the foregoing method embodiment. For example, the query module is configured to send a query instruction to the hard disk, where the query instruction instructs the hard disk to send the available physical capacity.

In a possible implementation, the apparatus further includes a writing module, configured to perform step 202 in the foregoing method embodiment. For example, the writing module is configured to write data into the hard disk.

The described apparatus embodiment is merely an example. For example, division into the modules is merely logical function division. There may be another division manner during actual implementation. For example, a plurality of modules or components may be combined or integrated into another system. For example, the hard disk management apparatus specifically includes a hard disk management module, a storage configuration management module, a policy control module, and the like. The step of allocating an OP to the hard disk, the step of dividing the available physical capacity, and the step of setting a system capacity are implemented by the storage configuration management module in the storage system. According to the hard disk event, the step of determining whether the hard disk OP capacity needs to be adjusted, the step of determining whether the hard disk OP capacity needs to be adjusted based on the state information, and the step of generating a setting instruction are implemented by setting a separate policy control module. The hard disk management module and another module feed back various information of the system and the hard disk to the policy control module, and the hard disk management module collects information, summarizes all information, and provides an optimal capacity allocation policy to the hard disk management module. The hard disk management module performs dynamical shifting adjustment on capacities of the system and the hard disk based on the policy.

It should be understood that procedures performed between modules of the hard disk management apparatus in the embodiment corresponding to FIG. 5 is similar to procedures performed by the storage system in the method embodiments corresponding to FIG. 1 to FIG. 4. Details are not described herein again.

According to a fourth aspect, this application provides a hard disk controller. The hard disk controller may be deployed in various types of hard disks, to set internal logic of a hard disk, so as to implement reporting and access of all available physical capacities; process a query command delivered by a hard disk management module by using a protocol, and feed back information such as an internal capacity and write amplification of the hard disk; process a setting command delivered by the hard disk management module by using a protocol, and adjust capacity allocation, read/write, and a running policy in the hard disk; and report a hard disk event, such as disk access, a capacity change, and a performance change, to the hard disk management module by using a protocol, and the hard disk management module processes the event accordingly.

Specifically, refer to FIG. 6. A hard disk controller 600 in this embodiment of this application includes a sending module 601 and a partitioning module 602 that are connected via a bus. The hard disk controller 600 may be the hard disk controller in the foregoing method embodiments, or may be configured as one or more chips in a hard disk. The hard disk controller may be configured to perform some or all functions controlled by the hard disk in the foregoing method embodiments.

For example, the sending module 601 may be configured to perform step 106 and step 206 in the foregoing method embodiments. For example, the sending module 601 is configured to send an available physical capacity of a hard disk to a hard disk management apparatus, and is further configured to return write error information. The partitioning module 602 may be configured to perform step 107 in the foregoing method embodiment. For example, the partitioning module 602 may be configured to divide the available physical capacity of the hard disk in response to a setting instruction sent by the hard disk management apparatus, where the setting instruction is used for dividing the available physical capacity into a hard disk available capacity and a hard disk OP capacity.

In a possible implementation, the hard disk controller further includes a reporting module, configured to perform step 303 in the foregoing method embodiment. For example, the reporting module is configured to report a hard disk event of the hard disk to the hard disk management apparatus.

In a possible implementation, the hard disk controller further includes a feedback module, configured to perform step 404 in the foregoing method embodiment. For example, the feedback module is configured to send state information of the hard disk to the hard disk management apparatus in response to a query instruction sent by the hard disk management apparatus.

In a possible implementation, the hard disk controller further includes a receiving module, configured to perform step 205 in the foregoing method embodiment. For example, the receiving module is configured to receive data written by the hard disk management apparatus.

It should be understood that procedures performed between modules of the hard disk controller in the embodiment corresponding to FIG. 6 is similar to procedures performed by the hard disk in the method embodiments corresponding to FIG. 1 to FIG. 4. Details are not described herein again.

FIG. 7 is a diagram of a possible structure of a storage system 700 according to an embodiment of this application. The storage system 700 may be configured as the foregoing hard disk management apparatus. The storage system 700 may include a processor 702, a computer-readable storage medium/memory 703, a transceiver 704, an input device 705, an output device 706, and a bus 701. The processor, the transceiver, the computer-readable storage medium, and the like are connected via the bus. A specific medium for connecting the foregoing parts is not limited in this embodiment of this application.

The transceiver 704 and the processor 702 may implement a corresponding step in any one of the embodiments in FIG. 1 to FIG. 4. Details are not described herein again.

It may be understood that FIG. 7 shows only a simplified design of the storage system. In actual application, the storage system may include any quantity of transceivers, processors, memories, and the like, and all processing devices that may implement this application fall within the protection scope of this application.

The processor 702 in the processing device 700 may be a general-purpose processor, for example, a CPU, a network processor (network processor, NP), or a microprocessor, or may be an ASIC, or one or more integrated circuits configured to control program execution of the solutions of this application. Alternatively, the processor 702 may be a digital signal processor (digital signal processor, DSP), a field-programmable gate array (field-programmable gate array, FPGA), another programmable logic device, a discrete gate, a transistor logic device, or a discrete hardware component. Alternatively, the controller/processor may be a combination of processors implementing a computing function, for example, a combination of one or more microprocessors, or a combination of a DSP and a microprocessor. The processor usually performs a logical and arithmetic operation based on program instructions stored in the memory.

The bus 701 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used for representation in FIG. 7, but this does not mean that there is only one bus or only one type of bus.

The computer-readable storage medium/memory 703 may further store an operating system and another application program. Specifically, the program may include program code, and the program code includes computer operation instructions. More specifically, the foregoing memory may be a ROM, a static storage device of another type that may store static information and instructions, a RAM, a dynamic storage device of another type that may store information and instructions, a magnetic disk memory, or the like. The memory 703 may be a combination of the foregoing memories. In addition, the computer-readable storage medium/memory may be located in the processor, may be located outside the processor, or may be distributed on a plurality of entities including a processor and a processing circuit. The computer-readable storage medium/memory may be specifically embodied in a computer program product. For example, the computer program product may include a computer-readable medium in an encapsulation material.

Alternatively, an embodiment of this application further provides a universal processing system, for example, usually referred to as a chip. The universal processing system includes one or more microprocessors that provide a processor function, and an external memory that provides at least a part of a storage medium. All these components are connected to another supporting circuit by using an external bus architecture. When instructions stored in the memory are executed by the processor, the processor is enabled to perform some or all of the steps of a first device in the hard disk management method in the embodiments in FIG. 1 to FIG. 4, and/or another process used for a technology described in this application.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or any other form of storage medium known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal. Certainly, the processor and the storage medium may alternatively exist in a first communication apparatus as discrete components.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional art, or all or some of the technical solutions may be implemented in the form of a software product. The computer software product is stored in a storage medium and includes several instructions for enabling a computer device (which may be a personal computer, a server, or a network device) to perform all or some of the steps of the methods described in embodiments of this application. The storage medium includes any medium that may store program code, such as a USB flash drive, a removable hard disk, a read-only memory (ROM, Read-Only Memory), a random access memory (RAM, Random Access Memory), a magnetic disk, or an optical disc.

## Claims

1. A hard disk management method, comprising:
obtaining an available physical capacity of a hard disk;
allocating a hard disk over-provisioning OP capacity to the hard disk based on a configuration requirement of a service configured by the hard disk;
generating a setting instruction, wherein the setting instruction instructs the hard disk to divide the available physical capacity into a hard disk available capacity and the hard disk OP capacity; and
sending the setting instruction to the hard disk.

2. The method according to claim 1, further comprising:
determining, in response to a hard disk event reported by the hard disk, whether the hard disk OP capacity needs to be adjusted; and
if the hard disk OP capacity needs to be adjusted, adjusting the hard disk OP capacity and the hard disk available capacity based on the hard disk event, and regenerating a setting instruction, wherein a sum of the hard disk OP capacity and the hard disk available capacity remains unchanged.

3. The method according to claim 1, further comprising:
periodically obtaining state information of the hard disk;
determining, based on the state information, whether the hard disk OP capacity needs to be adjusted; and
if the hard disk OP capacity needs to be adjusted, adjusting the hard disk OP capacity and the hard disk available capacity based on the state information, and regenerating a setting instruction, wherein a sum of the hard disk OP capacity and the hard disk available capacity remains unchanged.

4. The method according to claim 2 or 3, further comprising:
dividing the hard disk available capacity into a user available capacity and a system capacity based on system information of a storage system, wherein
the setting instruction specifically instructs the hard disk to divide the available physical capacity into the user available capacity, the system capacity, and the hard disk OP capacity; and
when the hard disk OP capacity needs to be adjusted, the adjusting the hard disk OP capacity and the hard disk available capacity, and regenerating a setting instruction specifically comprises:
adjusting the hard disk OP capacity and the system capacity based on the system information, and regenerating a setting instruction, wherein a sum of the hard disk OP capacity and the system capacity remains unchanged.

5. The method according to claim 4, wherein
the system capacity comprises a system data capacity and a system OP capacity, wherein
the setting instruction specifically instructs the hard disk to divide the available physical capacity into the user available capacity, the system data capacity, the system OP capacity, and the hard disk OP capacity; and
when the hard disk OP capacity needs to be adjusted, the adjusting the hard disk OP capacity and the hard disk available capacity, and regenerating a setting instruction specifically comprises:
adjusting the hard disk OP capacity and the system OP capacity based on the system information, and regenerating a setting instruction, wherein a sum of the hard disk OP capacity and the system OP capacity remains unchanged.

6. The method according to any one of claims 1 to 5, wherein before the obtaining an available physical capacity of a hard disk, the method further comprises:
sending a query instruction to the hard disk, wherein the query instruction instructs the hard disk to send the available physical capacity.

7. The method according to any one of claims 1 to 6, further comprising:
writing data into the hard disk; and
receiving write error information of the hard disk when a write capacity of the hard disk exceeds the hard disk available capacity.

8. A hard disk control method, comprising:
sending an available physical capacity of a hard disk to a hard disk management apparatus; and
dividing the available physical capacity of the hard disk in response to a setting instruction sent by the hard disk management apparatus, wherein the setting instruction is used for dividing the available physical capacity into a hard disk available capacity and a hard disk OP capacity.

9. The method according to claim 8, further comprising:
reporting a hard disk event of the hard disk to the hard disk management apparatus.

10. The method according to claim 8 or 9, further comprising:
sending state information of the hard disk to the hard disk management apparatus in response to a query instruction sent by the hard disk management apparatus.

11. The method according to any one of claims 8 to 10, further comprising:
receiving data written by the hard disk management apparatus; and
returning write error information if a write capacity of the hard disk exceeds the hard disk available capacity after the data is written.

12. A hard disk management apparatus, comprising:
an obtaining module, configured to obtain an available physical capacity of a hard disk;
a configuration module, configured to allocate a hard disk over-provisioning OP capacity to the hard disk based on a configuration requirement of a service configured by the hard disk;
a setting module, configured to generate a setting instruction, wherein the setting instruction instructs the hard disk to divide the available physical capacity into a hard disk available capacity and the hard disk OP capacity; and
a sending module, further configured to send the setting instruction to the hard disk.

13. The apparatus according to claim 12, further comprising:
a processing module, configured to determine, in response to a hard disk event reported by the hard disk, whether the hard disk OP capacity needs to be adjusted, wherein
the setting module is further configured to adjust the hard disk OP capacity and the hard disk available capacity based on the hard disk event, and regenerate a setting instruction, wherein a sum of the hard disk OP capacity and the hard disk available capacity remains unchanged.

14. The apparatus according to claim 12, wherein
the obtaining module is further configured to periodically obtain state information of the hard disk; and the apparatus further comprises:
a processing module, configured to determine, based on the state information, whether the hard disk OP capacity needs to be adjusted, wherein
the setting module is further configured to adjust the hard disk OP capacity and the hard disk available capacity based on the state information, and regenerate a setting instruction, wherein a sum of the hard disk OP capacity and the hard disk available capacity remains unchanged.

15. The apparatus according to any one of claims 12 to 14, further comprising:
a query module, configured to send a query instruction to the hard disk, wherein the query instruction instructs the hard disk to send the available physical capacity.

16. The apparatus according to any one of claims 12 to 15, further comprising:
a writing module, configured to write data into the hard disk, wherein
the obtaining module is further configured to receive write error information of the hard disk when a write capacity of the hard disk exceeds the hard disk available capacity.

17. A hard disk controller, comprising:
a sending module, configured to send an available physical capacity of a hard disk to a hard disk management apparatus; and
a partitioning module, configured to divide the available physical capacity of the hard disk in response to a setting instruction sent by the hard disk management apparatus, wherein the setting instruction is used for dividing the available physical capacity into a hard disk available capacity and a hard disk OP capacity.

18. The hard disk controller according to claim 17, further comprising:
a reporting module, configured to report a hard disk event of the hard disk to the hard disk management apparatus.

19. The hard disk controller according to claim 17 or 18, further comprising:
a feedback module, configured to send state information of the hard disk to the hard disk management apparatus in response to a query instruction sent by the hard disk management apparatus.

20. The hard disk controller according to any one of claims 17 to 19, further comprising:
a receiving module, configured to receive data written by the hard disk management apparatus, wherein
the sending module is further configured to return write error information if a write capacity of the hard disk exceeds the hard disk available capacity after the data is written.

21. A storage system, wherein the device comprises a memory and a processor, the memory stores code, the processor is configured to execute the code, and when the code is executed, the processor performs the method according to any one of claims 1 to 7.

22. A computer storage medium, wherein the computer storage medium stores one or more instructions, and when the instructions are executed by one or more computers, the one or more computers are enabled to implement the method according to any one of claims 1 to 7.

23. A computer program product, wherein the computer program product stores instructions, and when the instructions are executed by a computer, the computer is enabled to implement the method according to any one of claims 1 to 7.
